# EUROPEAN PATENT APPLICATION

(11) **EP 2 725 506 A2**
(43) Date of publication of application: **30.04.2014**
(21) Application number: 13189898.3
(22) Date of filing: 23.10.2013
(51) Int. Cl.: G06F 17/30

(54) **Apparatus and method for displaying loading state of web browser in portable terminal**

(30) Priority: 29.10.2012 KR 20120120528
(71) Applicant: Samsung Electronics Co., Ltd, Gyeonggi-do 443-742 (KR)
(72) Inventor: Lee, Sung-Hak, Gyeonggi-do 443-742 (KR); Kim, Dong-Jae, Gyeonggi-do 443-742 (KR); Lee, Kwang-Bin, Gyeonggi-do 443-742 (KR)
(74) Representative: Birchenough, Lewis

(57) **Abstract**

An apparatus for displaying a loading state of a web browser in a portable terminal is provided. The apparatus includes a memory for storing a resource management list, the resource management list including at least one resource identifier that indicates unnecessary resource for a particular website, a controller configured to receive the resource from a website server at a request to access the particular website; to determine whether the resource management list has a resource identifier that corresponds to the received resource, and a display unit for displaying a progress bar to represent a loading state of the particular website based on the determination.

## Description

### BACKGROUND

### 1. Field of the Invention

The present disclosure relates generally to portable terminals. More particularly, the present invention relates to an apparatus and method for displaying a loading state of a web browser in a portable terminal.

### 2. Description of the Related Art

Portable terminals, such as smart phones, tablets, etc., provide users with various useful functionalities via many different applications. With the provision of various functionalities, the development of portable terminals are on a trend toward turning into devices that can use different forms of information as well as the voice call functionality. In particular, the applications often include web browser applications accessible to the Internet.

In general, while accessing a particular web site, the web browser application displays a status as a web page loads in a form of a progress bar in an address window on the top of the web browser. Resources dedicated to statistics related to the web page (e.g., access count or access logs of a user to the web page) may be received to display the web page. Such resources dedicated to statistics have nothing to do with content of the web page.

However, the portable terminal may be waiting for the resources dedicated to statistics and thus have a problem of having the progress bar last for a long time.

The above information is presented as background information only to assist with an understanding of the present disclosure. No determination has been made, and no assertion is made, as to whether any of the above might be applicable as prior art with regard to the present invention.

### SUMMARY

Aspects of the present invention are to address at least the above-mentioned problems and/or disadvantages and to provide at least the advantages described below. Accordingly, in one embodiment, the present invention includes an apparatus and method for displaying a progress bar taking into account resources related to a corresponding web page's content.

Another aspect of the present invention may provide an apparatus and method for displaying a progress bar excluding resources related to a corresponding web page's content.

In accordance with an aspect of the present invention, an apparatus for displaying a loading state of a web browser in a portable terminal is provided. The apparatus typically includes a memory for storing a resource management list, the resource management list including at least one resource identifier that indicates unnecessary resource for a particular website, a controller configured to receive the resource from a website server at a request to access the particular website; to determine whether the resource management list has a resource identifier that corresponds to the received resource, and a display unit for displaying a progress bar to represent a loading state of the particular website based on the determination.

In accordance with another aspect of the present invention, a method for displaying a loading state of a web browser in a portable terminal is provided. The method typically includes receiving a resource from a website server at a request to access a particular website; and determining whether a resource management list stored in memory has a resource identifier that corresponds to the received resource and displaying a progress bar to represent a loading state of the particular website based on the determination, wherein the resource management list includes at least one resource identifier that indicates unnecessary resource for the particular website.

Other aspects, advantages, and salient features of the invention will become apparent to those skilled in the art from the following detailed description, which, taken in conjunction with the annexed drawings, discloses exemplary embodiments of the invention.

### BRIEF DESCRIPTION OF THE DRAWINGS

The above and other aspects, features, and advantages of certain exemplary embodiments of the present invention will become more apparent to a person of ordinary skill in the art from the following description taken in conjunction with the accompanying drawings in which:
FIG. 1 is a schematic diagram of a wireless communication system, according to an exemplary embodiment of the present invention;
FIG. 2 is a block diagram of a portable terminal, according to an exemplary embodiment of the present invention;
FIG. 3 is a flowchart illustrating a operation of a method of displaying a loading state of a web browser in a portable terminal, according to an exemplary embodiment of the present invention;
FIGS. 4A and 4B are flowcharts illustrating a operation of method of displaying a loading state of a web browser in a portable terminal, according to another exemplary embodiment of the present invention; and
FIG. 5 illustrates screens which display a loading state of a web browser in a portable terminal, according to an exemplary embodiment of the present invention.

Throughout the drawings, like reference numerals will be understood to refer to like parts, components, and structures.

### DETAILED DESCRIPTION

The following description with reference to the accompanying drawings is provided to assist in a comprehensive understanding of exemplary embodiments of the invention as defined by the claims and their equivalents. It includes various specific details to assist in that understanding but these are to be regarded as merely exemplary. Accordingly, those of ordinary skill in the art will recognize that various changes and modifications of the embodiments described herein can be made without departing from the scope and spirit of the invention. In addition, descriptions of well-known functions and constructions may be omitted for clarity and conciseness.

The terms and words used in the following description and claims are not limited to the bibliographical meanings, but, are merely used by the inventor to enable a clear and consistent understanding of the invention. Accordingly, it should be apparent to those skilled in the art that the following description of exemplary embodiments of the present invention is provided for illustration purpose only and not for the purpose of limiting the invention as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

The portable terminal according to an embodiment of the present invention is typically a mobile electronic device that is easily carried by humans or may be mounted in or on a vehicle (such as an automobile or bicycle), and may include video phones, cellular phones, smart phones, International Mobile Telecommunication-2000 (IM-2000) terminals, Wideband Code Division Multiple Access (WCDMA) terminals, Universal Mobile Telecommunication Service (UMTS) terminals, Personal Digital Assistants (PDAs), Portable Multimedia Players (PMPs), Digital Multimedia Broadcasting (DMB) terminals, E-Books, portable computers (e.g., laptops, tablet Personal Computers (PCs), etc.), or digital cameras.

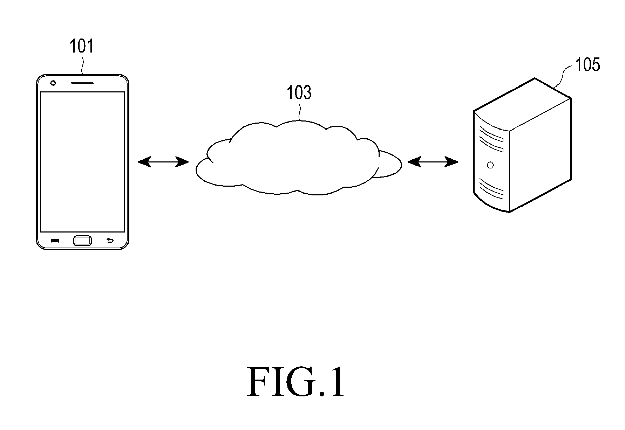

FIG. 1 is a schematic diagram of a wireless communication system, according to an exemplary embodiment of the present invention.

Referring to FIG. 1, the wireless communication system includes a portable terminal 101, a wireless network 103, and a website server 105.

The website server 105 stores resources regarding a particular website beforehand. Such resources typically include textual information, audio, video and/or other information which may nor not be directly observable by the user of the portable terminal 101 Upon reception of a message to request a resource of the particular web site from the first portable terminal 101, for example, through the wireless network 103, the website server 105 transmits the resource stored beforehand to the portable terminal 101 in response to the message. The wireless network 103 receives a message to request the resource regarding the particular website from the portable terminal 101 and forwards the message to the website server 105. In return, the wireless network 103 receives the resource regarding the particular website from the website server 105 and forwards the resource to the portable terminal 101.

When the user requests access to a particular website, the portable terminal 101 transmits a message to request a resource to the website server 105 through the wireless network 103, and in return receives the resource regarding the particular website from the website server 105 through the wireless network 103. The portable terminal 101 displays a state of loading the particular website by taking into account a resource management list stored therein beforehand and a resource which is being received (hereinafter also referred to as a received resource). The resource management list includes resource identifiers each indicating a particular resource which is unnecessary for the user to use the particular website.

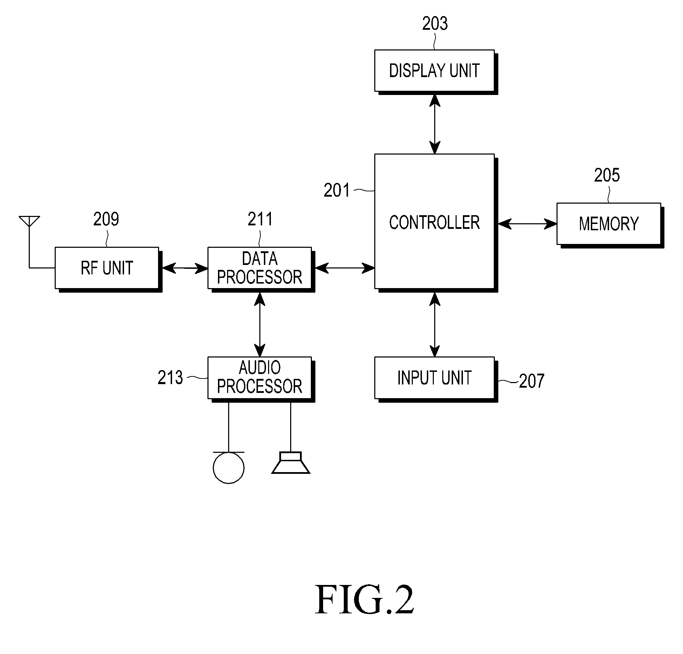

FIG. 2 is a block diagram of a portable terminal, according to an exemplary embodiment of the present invention. Operations of the portable terminal will now be described in detail below with reference to FIG. 2.

Referring to FIG. 2, the portable terminal typically includes a controller 201 (containing a subprocessor and/or a microprocessor), a display unit 203, an input unit 207, a memory 205, a radio frequency (RF) unit 209, a data processor 211, and an audio processor 213 (which may contain a subprocessor or a separate processor).

The RF unit 209 performs radio communication functionality of the portable terminal. More specifically, the RF unit 209 typically includes a radio transceiver for performing up conversion on the frequency of a signal for transmission and amplifying the signal, and a radio receiver for performing low-noise amplification on a received signal and performing down conversion on the frequency of the received signal. The data processor 211 typically includes a transmitter for encoding and modulating the signal for transmission, and a receiver for demodulating and decoding the received signal. Here, the data processor 211 may consist of a modem and a codec, and the codec may have a data codec, for e.g., packet data processing, or an audio codec for e.g., audio signal processing.

The audio processor 213 reproduces received audio signals output by the data processor 211 through a speaker, or transmits an audio signal generated by a microphone to the data processor 211 for transmission. An input unit 207 may include alphanumeric keys with which to input number and character information, and/or function keys with which to set up various functions.

The display unit 203 displays an image signal on the screen, and displays data at the request of the controller 201 to be output. If the display unit 203 is implemented as a capacitive touchscreen display or a resistive touchscreen display, the input unit 207 may only include a minimum number of preset keys while the display unit 203 may take over some of key input functionalities of the input unit 207.

The memory 205 typically includes a program memory and a data memory. Here, the program memory stores a booting system and an operating system (hereinafter, referred to as 'OS') for controlling general operations of the portable terminal, and the data memory stores various data generated in the operation of the portable terminal. Especially, the memory 205 stores a resource management list. The resource management list includes resource identifiers each indicating a particular resource which is unnecessary for the user to use the particular website.

Specifically, the memory 207 may store the resource management list as shown in Table 1.

**Table 1**

| Web Page Name | Resource Identifier |
|---|---|
| www.CNN.com | aaa |
| | bbb |
| | ccc |

aaa, bbb, and ccc are each a resource identifier, where each resource can be audio, textual, video or other information contained within the web page. This resource management list is generated by the portable terminal 101 from data received from the website server 105 as unnecessary.

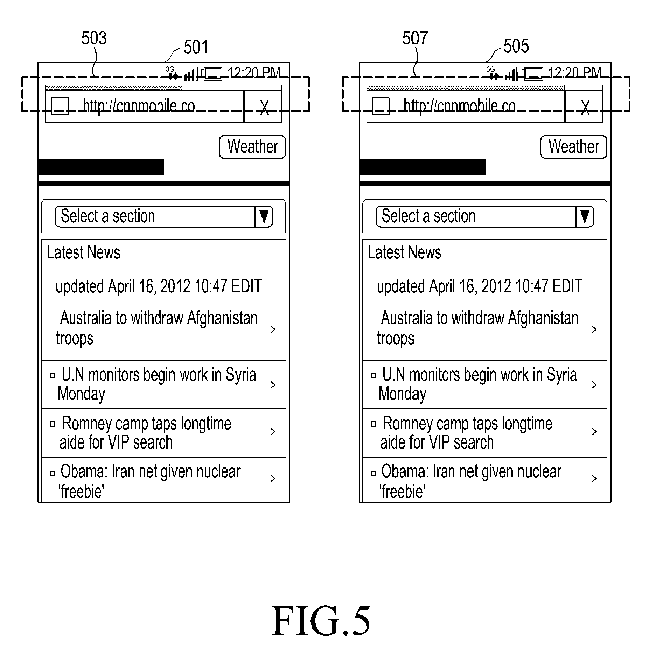

The controller 201 controls general operations of the portable terminal 101. In particular, the controller 201 typically displays a progress bar (shown, for example, in Fig. 5) that represents a present loading state of a web browser by taking into account the resource identifiers included in the resource management list.

Specifically, in an embodiment, the controller 201 determines whether the user requests to access a particular website. If the access to the particular website is requested, the controller 201 transmits a message to request resource transmission to the website server 105 and in return, receives a resource regarding the particular website from the website server 105.

The controller 201 compares at least one resource identifier for the particular website included in the resource management list with an identifier for the received resource (hereinafter simply called received resource identifier). For example, if the user's portable terminal receives a resource regarding www.CNN.com, the controller 201 may compare resource identifiers aaa, bbb, and ccc included in the resource management list as shown in Table 1 with the received resource identifier. If the received resource identifier is aaa, the controller 201 may determine that the received resource identifier has a match in the resource management list. If the received resource identifier is ddd, the controller 201 may determine that the received resource identifier has no match in the resource management list.

In the case that the received resource identifier has a match in the resource management list, the controller 201 determines whether the reception of the received resource has been correctly completed. If the received resource meets a predetermined reception failure condition, i.e., although the resource has been received, the reception has failed, the controller 201 determines that the reception of the received resource has not been correctly completed. A reception failure condition may include instances 1) when the received resource timed out until Transmission Control Protocol (TCP) connection, 2) when the received resource does not respond to a Hyper Text Transfer Protocol (HTTP) request after TCP connection, and/or 3) when the received resource is a resource whose header was transmitted but whose body has not yet been transmitted, after HTTP request, which is, e.g., a resource dedicated to statistics.

If the reception of the received resource has been correctly completed, the controller 201 changes the resource management list stored in memory 205 by eliminating a resource identifier that matches the received resource identifier from among at least one resource identifier for the particular website included in the resource management list, thereby indicating that the received resource no longer needs to be received from the web server 105. The controller 201 then displays or adjusts the progress bar by taking into account the changed resource management list. The progress bar represents a state of loading the particular website. Because an identifier of the same resource as the received resource is not included in the resource management list, the controller 201 may display a progress rate with the progress bar based on reception rate of the received resource.

For example, one a particular website requires resource aaa (being 100 kB), resource bbb (being 250 kB) and resource ccc (being 1000 kB), for a total of 1350 kB. Should none of aaa, bbb nor ccc be correctly completed, the progress bar would indicate a completion percentage of zero. However, should resource bbb be correctly completed, the progress bar would indicate a completion percentage of approximately 18.5%.

Otherwise, if the reception of the received resource has not been correctly completed, i.e., the resource has not been received or the reception has failed, the controller 101 displays the progress bar by taking into account the resource management list stored beforehand. Because an identifier of the same resource as the received resource is included in the resource management list, the controller 201 may display a progress rate with the progress bar without considering the reception rate of the received resource even while continuing to receive the resource.

In the case that the received resource identifier has no match in the resource management list, the controller 201 determines whether the reception of the received resource has been correctly completed. If the reception of the received resource has been correctly completed, the controller 101 displays the progress bar by taking into account the resource management list stored beforehand. Because an identifier of the same resource as the received resource is not included in the resource management list, the controller 201 may display a progress rate with the progress bar based on reception rate of the received resource.

Otherwise, if the reception of the received resource has not been correctly completed, the controller 201 changes the resource management list by adding the received resource identifier to the resource management list. The controller 201 then displays the progress bar by taking into account the changed resource management list. Because an identifier of the same resource as the received resource is included in the resource management list, the controller 201 may display a progress rate with the progress bar without considering the reception rate of the received resource even while continuing to receive the resource.

In another embodiment, the controller 201 determines whether the user requests to access a particular website. If the access to the particular website is requested, the controller 201 transmits a message to request resource transmission to the website server 105 and in return, receives a resource regarding the particular website from the website server 105.

The controller 201 then compares at least one resource identifier for the particular website included in the resource management list with an identifier for the received resource (or, a received resource identifier).

If the received resource identifier has a match in the resource management list, the controller 201 determines whether the reception of the received resource has been correctly completed. If the received resource meets a predetermined reception failure condition, the controller 201 determines that the reception of the received resource has not been correctly completed. The reception failure condition includes instances 1) when the received resource timed out until TCP connection, 2) when the received resource does not respond to an HTTP request after TCP connection, or 3) when the received resource is a resource whose header was transmitted but whose body has not yet been transmitted, after HTTP request, which is, e.g., a resource dedicated to statistics.

If the reception of the received resource has not been correctly completed, the controller 101 displays the progress bar by taking into account the resource management list stored beforehand. Because an identifier of the same resource as the received resource is included in the resource management list, the controller 201 may display a progress rate with the progress bar without considering the reception rate of the received resource even while continuing to receive the resource.

Otherwise, if the reception of the received resource has been correctly completed, the controller 101 determines whether the received resource affects usability. If the received resource meets a usability determination condition, the controller 201 determines that the received resource affects the usability. The usability determination condition includes instances 1) when the received resource is related to image data displayed on the screen of the portable terminal 101, or 2) when the received resource keeps being requested by the user after the display of the loading state has been completed with the progress bar.

In an embodiment, after the display of the loading state has been completed, when there is a shift from one web page to another web page and a received resource is related to the another web page, the controller 201 may determine that the received resource affects the usability. In another embodiment, after the display of the loading state has been completed, if a particular web page is repeatedly refreshed by the user, the controller 201 may determine that the received resource affects the usability. In another embodiment, if the received resource is related to statistics regarding the web page, the controller 201 may determine that the received resource does not affect the usability. In other words, the controller 201 determines if the received resource, in its previously received state, is sufficient as previously received. If the previously received resource is unacceptable, it is identified as "affecting the usability", in contrast, if the previously received resource is acceptable, it is identified as "not affecting the usability".

If the received resource does not affect the usability, the controller 101 displays the progress bar by taking into account the resource management list stored beforehand. Because an identifier of the same resource as the received resource is included in the resource management list, the controller 201 may display a progress rate with the progress bar without considering the reception rate of the received resource even while continuing to receive the resource. Because the resource has been determined not to affect the usability, the controller 201 may determine that it is not necessary to request the same resource again, and the controller 201 can simply utilize the resource previously received from the website server 105 and stored in the memory 205.

Otherwise, if the received resource affects the usability, i.e., the received resource is unacceptable, the controller 201 changes the resource management list by eliminating a resource identifier that matches the received resource identifier from among at least one resource identifier for the particular website included in the resource management list. The controller 201 then displays the progress bar by taking into account the changed resource management list. Because an identifier of the same resource as the received resource is not included in the resource management list, the controller 201 may display a progress rate with the progress bar based on reception rate of the received resource.

In the case that the received resource identifier has no match in the resource management list, the controller 201 determines whether the reception of the received resource has been correctly completed. If the reception of the received resource has not been correctly completed, the controller 201 changes the resource management list by adding the received resource identifier to the resource management list. The controller 201 then displays the progress bar by taking into account the changed resource management list. Because an identifier of the same resource as the received resource is included in the resource management list, the controller 201 may display a progress rate with the progress bar without considering the reception rate of the received resource even while continuing to receive the resource.

If the reception of the received resource has been correctly completed, the controller 101 determines whether the received resource affects usability. If the received resource meets the usability determination condition, the controller 201 determines that the received resource affects the usability.

If the received resource affects the usability, the controller 101 displays the progress bar by taking into account the resource management list stored beforehand. Because an identifier of the same resource as the received resource is not included in the resource management list, the controller 201 may display a progress rate with the progress bar based on reception rate of the received resource.

Otherwise, if the received resource does not affect the usability, the controller 201 changes the resource management list by adding the received resource identifier to the resource management list. The controller 201 then displays the progress bar by taking into account the changed resource management list. Because an identifier of the same resource as the received resource is included in the resource management list, the controller 201 may display a progress rate with the progress bar without considering the reception rate of the received resource even while continuing to receive the resource.

With the operations as described above, the controller 201 may display the loading state of the web browser by taking into account the received resource. At this time, the controller 201 checks the reception rate of at least one resource that corresponds to at least one resource identifier which is not included in the resource management list, and displays the progress bar based on the reception rate.

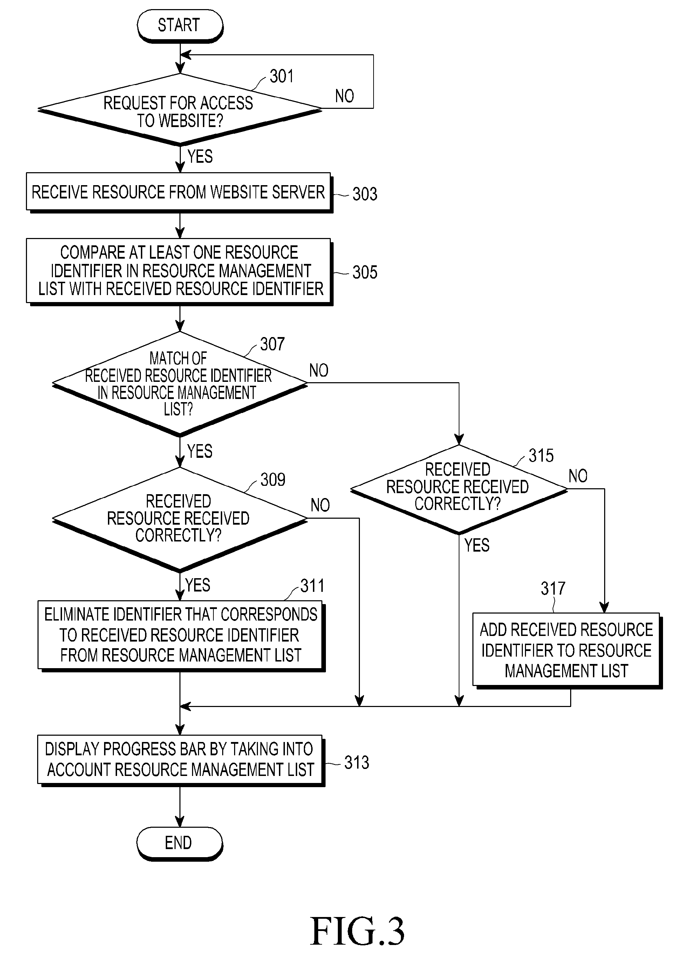

FIG. 3 is a flowchart illustrating a method of displaying a loading state of a web browser in a portable terminal, according to an exemplary embodiment of the present invention.

Referring to FIG. 3, at step 301, the controller 201 determines whether the user requests to access a particular website. If the request for the access to the particular website is made, the controller 201 proceeds to step 303, or otherwise, repeats the step 301. At step 303, the controller 201 transmits a message to request resource transmission to the website server 105 and in return, receives a resource regarding the particular website from the website server 105, and proceeds to step 305.

At step 305, the controller 201 compares at least one resource identifier for the particular website included in the resource management list with an identifier for the received resource (or a received resource identifier), and proceeds to step 307. The resource management list includes resource identifiers each indicating a particular resource which is unnecessary for the user to use the particular website. For example, if the user's portable terminal receives a resource regarding www.CNN.com, the controller 201 may compare resource identifiers aaa, bbb, and ccc included in the resource management list as shown in Table 1 with the received resource identifier.

At step 307, the controller 210 determines whether the received resource identifier has a match in the resource management list based on the comparison. If the received resource identifier is aaa, the controller 201 may determine that the received resource identifier has a match in the resource management list. If the received resource identifier is ddd, the controller 201 may determine that the received resource identifier has no match in the resource management list. In other words, in step 307, the controller 210 compares each resource to be received with the resources contained in the resource management list to determine if the particular resources have been previously corrected received and are stored in the memory 205.

If it is determined that the received resource identifier has a match in the resource management list, the controller 201 proceeds to step 309, or otherwise if the received resource identifier has no match in the resource management list, the controller 201 proceeds to step 315.

At step 309, the controller 201 determines whether reception of the received resource has been correctly completed. If it is determined that the reception of the received resource has been correctly completed, the controller 201 proceeds to step 311, or otherwise, proceeds to step 313. If the received resource meets a predetermined reception failure condition indicating that the received resource has not been corrected received, the controller 201 determines that the reception of the received resource has not been correctly completed. The reception failure condition includes instances 1) when the received resource timed out until TCP connection, 2) when the received resource does not respond to an HTTP request after TCP connection, or 3) when the received resource is a resource whose header was transmitted but whose body has not yet been transmitted, after HTTP request, which is e.g., a resource dedicated to statistics.

At step 311, the controller 201 changes the resource management list stored in memory 205 by eliminating a resource identifier that corresponds to the received resource identifier from among at least one resource identifier for the particular website included in the resource management list, and proceeds to step 313.

At step 315, the controller 201 determines whether reception of the received resource has been correctly completed. If it is determined that the reception of the received resource has been correctly completed, the first controller 201 proceeds to step 313, or otherwise, proceeds to step 317. At step 317, the controller 201 changes the resource management list by adding the received resource identifier to the resource management list, and proceeds to step 313.

At step 313, the controller 201 then displays the progress bar by taking into account the resource management list. At this time, the controller 201 checks the reception rate of at least one resource that corresponds to at least one resource identifier which is not included in the resource management list, and displays the progress bar based on the reception rate.

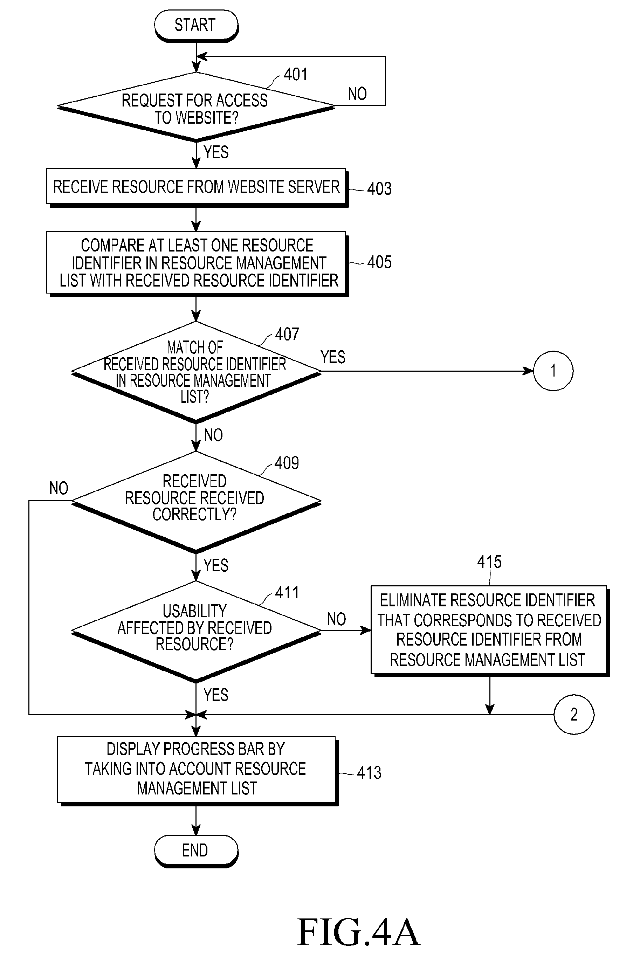

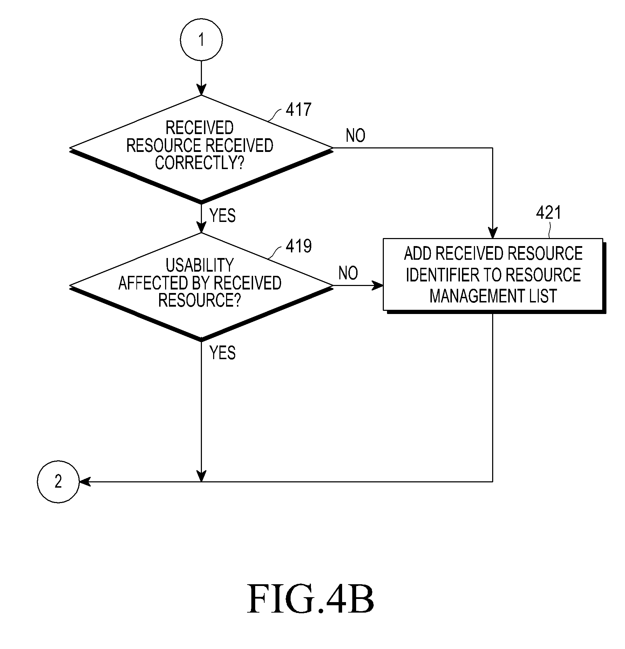

FIGS. 4A and 4B are flowcharts illustrating a method of displaying a loading state of a web browser in a portable terminal, according to another exemplary embodiment of the invention.

Referring to FIGS. 4A and 4B, at step 401, the controller 201 determines whether the user requests to access a particular website. If the request for the access to the particular website is made, the controller 201 proceeds to step 403, or otherwise, repeats step 401. At step 403, the controller 201 transmits a message to request resource transmission to the website server 105 and in return, receives a resource regarding the particular website from the website server 105, and proceeds to step 405.

At step 405, the controller 201 compares at least one resource identifier for the particular website included in the resource management list with an identifier for the received resource (or a received resource identifier), and proceeds to step 407. The resource management list includes resource identifiers each indicating a particular resource which is unnecessary for the user to use the particular website.

At step 407, the controller 210 determines whether the received resource identifier has a match in the resource management list based on the comparison. If it is determined that the received resource identifier has a match in the resource management list, the controller 201 proceeds to step 409, or otherwise if the received resource identifier has no match in the resource management list, the controller 201 proceeds to step 417.

At step 409, the controller 201 determines whether reception of the received resource has been correctly completed. If the received resource meets a predetermined reception failure condition, the controller 201 determines that the reception of the received resource has not been correctly completed. The reception failure condition includes instances 1) when the received resource timed out until TCP connection, 2) when the received resource does not respond to an HTTP request after TCP connection, or 3) when the received resource is a resource whose header was transmitted but whose body has not yet been transmitted, after HTTP request, which is e.g., a resource dedicated to statistics.

If it is determined that the received resource has been correctly received, the controller 201 proceeds to step 411, or otherwise, proceeds to step 415.

At step 411, the controller 201 determines whether the received resource affects the usability. If the received resource meets a usability determination condition, the controller 201 determines that the received resource affects the usability. The usability determination condition includes instances 1) when the received resource is related to image data displayed on the screen of the portable terminal 101, or 2) when the received resource keeps being requested by the user after the display of the loading state has been completed with the progress bar.

In an embodiment, after the display of the loading state has been completed, when there is a shift from one web page to another web page and a received resource is related to the another web page, the controller 201 may determine that the received resource affects the usability. In another embodiment, after the display of the loading state has been completed, if a particular web page is repeatedly refreshed by the user, the controller 201 may determine that the received resource affects the usability.

If it is determined that the received resource does not affect the usability, the controller 201 proceeds to step 413, or otherwise if the received resource affects the usability, the controller 201 proceeds to step 415.

At step 415, the controller 201 changes the resource management list by eliminating a resource identifier that corresponds to the received resource identifier from among at least one resource identifier for the particular website included in the resource management list, and proceeds to step 413.

At step 417, the controller 201 determines whether the received resource has been completely received. If it is determined that reception of the received resource has not been correctly completed, the first controller 201 proceeds to step 421, or otherwise, proceeds back to step 419.

At step 419, the controller 201 determines whether the received resource affects the usability. If the received resource meets a usability determination condition, the controller 201 determines that the received resource affects the usability. If it is determined that the received resource affects the usability, the first controller 201 proceeds to step 413, or otherwise, proceeds back to step 421.

At step 421, the controller 201 changes the resource management list by adding the resource management list, and proceeds to step 413. At step 413, the controller 201 displays the progress bar by taking into account the resource management list. The controller 201 checks the reception rate of at least one resource that corresponds to at least one resource identifier which is not included in the resource management list, and displays the progress bar based on the reception rate.

FIG. 5 illustrates screens, each of which displays a loading state of a web browser in a portable terminal, according to an exemplary embodiment.

Referring to FIG. 5, a screen 501 displays a progress bar 503 for indicating a state of loading a particular website after the portable terminal accesses the particular website. In the screen 501, if a received resource is included in the resource management list or added to the resource management list, the portable terminal continues to receive the received resource but excludes the reception rate of the received resource, and as shown in a screen 505, calculates progress rate of a progress bar 507 and displays the progress rate with the progress bar 507.

With the operations as described above, the embodiments of the invention displays the progress bar by taking into account a resource regarding content of a web page and displays the progress bar by excluding the resource regarding the content of the web page.

The techniques described herein have an effect of displaying a progress bar by taking into account resources related to content of a corresponding web page.

The techniques described herein have an effect of displaying a progress bar by excluding resources related to content of a corresponding web page.

The above-described methods according to the present invention can be implemented in hardware, firmware or as software or computer code that can be stored in a recording medium such as a CD ROM, an RAM, a floppy disk, a hard disk, or a magneto-optical disk or computer code downloaded over a network originally stored on a remote recording medium or a non-transitory machine readable medium and to be stored on a local recording medium, so that the methods described herein can be rendered in such software that is stored on the recording medium using a general purpose computer, or a special processor or in programmable or dedicated hardware, such as an ASIC or FPGA. As would be understood in the art, the computer, the processor, microprocessor controller or the programmable hardware include memory components, e.g., RAM, ROM, Flash, etc. that may store or receive software or computer code that when accessed and executed by the computer, processor or hardware implement the processing methods described herein. In addition, it would be recognized that when a general purpose computer accesses code for implementing the processing shown herein, the execution of the code transforms the general purpose computer into a special purpose computer for executing the processing shown herein.

Several embodiments have been described in connection with e.g., mobile communication terminals, but it will be understood that various modifications can be made without departing the scope of the present invention. Thus, it will be apparent to those ordinary skilled in the art that the invention is not limited to the embodiments described, but can encompass not only the appended claims but the equivalents.

## Claims

1. An apparatus for displaying a loading state of a web browser in a portable terminal, **characterized by**:
a memory (205) for storing a resource management list, the resource management list including at least one resource identifier that indicates a unnecessary resource for a particular website;
a controller (201) configured to receive the resource from a website server (205) at a request to access the particular website; to determine whether the resource management list has a resource identifier that corresponds to the received resource; and
a display unit (203) for displaying a progress bar on the display unit to represent a loading state of the particular website based on the determination of the controller (201).

2. The apparatus of claim 1, **characterized in that** the controller (201) is configured to determine whether reception of the received resource has been correctly completed if the resource management list does not have a resource identifier that corresponds to the received resource; if it is determined that the reception of the received resource has not been correctly completed, to change the resource management list by adding the resource identifier to the resource management list; to check reception rate of a resource whose identifier is not included in the changed resource management list; and to display the progress bar on the display unit (203) based on the reception rate.

3. The apparatus of claim 2, **characterized in that** the controller (201) is configured to determine whether the received resource affects usability if the reception of the received resource has been correctly completed; if it is determined that the received resource does not affect the usability, to change the resource management list by adding the resource identifier to the resource management list; to check reception rate of a resource whose identifier is not included in the resource management list; and to display the progress bar on the display unit (203) based on the reception rate.

4. The apparatus of claim 3, **characterized in that** the controller (201) is configured to check reception rate of a resource whose identifier is not included in the resource management list if the received resource affects the usability; and to display the progress bar on the display unit (203) based on the reception rate.

5. The apparatus of claim 3, **characterized in that** the controller (201) is configured to determine that the received resource affects the usability if the received resource is displayed in the display unit.

6. A method for displaying a loading state of a web browser in a portable terminal, **characterized by**:
receiving a resource from a website server (205) at a request to access a particular website; and
determining whether a resource management list stored in a memory (205) has a resource identifier that corresponds to the received resource and displaying a progress bar on a display unit (203) to represent a loading state of the particular website based on the determination,
wherein the resource management list includes at least one resource identifier that indicates unnecessary resource for the particular website.

7. The method of claim 6, **characterized in that** displaying a progress bar comprises
determining whether reception of the received resource has been correctly completed if the resource management list does not have a resource identifier that corresponds to the received resource;
if it is determined that the reception of the received resource has not been correctly completed, changing the resource management list by adding the resource identifier to the resource management list; and
checking reception rate of a resource whose identifier is not included in the changed resource management list and displaying the progress bar based on the reception rate.

8. The method of claim 7, **characterized in that** if it is determined that the reception of the received resource has been correctly completed, further comprising:
determining whether the received resource affects usability;
if it is determined that the received resource does not affect the usability, changing the resource management list by adding the resource identifier to the resource management list; and
checking reception rate of a resource whose identifier is not included in the changed resource management list and displaying the progress bar based on the reception rate.

9. The method of claim 8, **characterized in that** if it is determined that the received resource affects the usability, further comprising:
checking reception rate of a resource whose identifier is not included in the resource management list; and
displaying the progress bar based on the reception rate.

10. The method of claim 8, **characterized in that** determining whether the received resource affects usability comprises determining that the received resource affects the usability if the received resource is displayed in a display unit (203).

11. The method of claim 7, **characterized in that** the determining step comprises calculating a fraction of the particular website received by the controller (201) and the displayed progress bar indicates the fraction.

12. The method of claim 11, **characterized in that** the fraction is a percentage of the website as measured in kB.

13. The method of claim 7, further comprising updating the displayed progress bar periodically during the reception of the resources to indicate the reception rate of the particular website.
